# EUROPÄISCHE PATENTANMELDUNG

(11) **EP 2 500 823 A1**
(43) Veröffentlichungstag der Anmeldung: **19.09.2012**
(21) Anmeldenummer: 11158252.4
(22) Anmeldetag: 15.03.2011
(51) Int. Cl.: G06F 9/50

(54) **Betrieb eines Datenverarbeitungsnetzes mit mehreren geografisch beabstandeten Datenzentren**

(71) Anmelder: Siemens Aktiengesellschaft, 80333 München (DE)
(72) Erfinder: Dorn, Karlheinz, 90562, Kalchreuth (DE); Dominick, Lutz, 91330, Eggolsheim (DE); Ukis, Vladyslav, 90491, Nürnberg (DE)

(57) **Zusammenfassung**

Es werden ein Verfahren und eine Einrichtung zum Betrieb eines Datenverarbeitungsnetzes (1) angegeben, das mehrere geographisch beabstandete Datenzentren (2a,2b), und eine Vielzahl von Clientrechnern (3a-31) umfasst, wobei die Clients (3a-31) zumindest mit jeweils einem der Datenzentren (2a,2b) datenübertragungstechnisch verbunden sind, wobei in jedem der Datenzentren (2a,2b) ein oder mehrere virtuelle Server (4a-4e) betreibbar sind, wobei auf jedem virtuellen Server (4a-4e) ein Applikations-Backendmodul (5) einer verteilten Software-Applikation (6) implementiert ist, wobei auf jedem der Clientrechner (3a-31) ein Applikations-Frontendmodul (7) der Software-Applikation (6) implementiert ist, und wobei jedem Applikations-Frontendmodul (7) ein Applikations-Backendmodul (6) zur Bearbeitung von Datenbearbeitungsanfragen zugewiesen ist. Erfindungsgemäß ist vorgesehen, in einer Datenbank (12) Zugriffsdaten (D) zu sammeln, die Angaben zu dem geographischen Standort der Clients (3a-31), Angaben zu dem geographischen Standort der virtuellen Server (4a-4e) sowie Angaben zu dem Auslastungsgrad der virtuellen Server (4a-4e) umfassen. Weiterhin ist vorgesehen, die in der Datenbank (12) gesammelten Zugriffsdaten (D) automatisch zu analysieren und anhand des Analyseergebnisses automatisch einen hinsichtlich der durchschnittlichen Latenzzeit verbesserter Migrationsplan (M) für die Verteilung der virtuellen Server (4a-4e) auf die Datenzentren (2a,2b) zu erstellen. Die virtuellen Server (4a-4e) werden dabei nach Maßgabe des Migrationsplans (M) zwischen den Datenzentren (2a,2b) migriert.

## Beschreibung

Die Erfindung bezieht sich auf ein Verfahren sowie eine Einrichtung zum Betrieb eines Datenverarbeitungsnetzes mit mehreren geografisch beabstandeten Datenzentren sowie mit einer Vielzahl von Clients, d.h. Clientrechnern, die zumindest mit jeweils einem der Datenzentren datenübertragungstechnisch verbunden sind, wobei in jedem der Datenzentren eine oder mehrere virtuelle Server betreibbar sind, wobei auf jedem virtuellen Server ein Applikations-Backendmodul einer verteilten Software-Applikation implementiert ist, wobei auf jedem der Clients ein Applikations-Frontendmodul der Software-Applikation implementiert ist, und wobei jedem Applikations-Frontendmodul ein Applikations-Backendmodul zur Bearbeitung von Datenbearbeitungsanfragen (Zugriffen) zugewiesen ist.

Solche Datenverarbeitungsnetze werden insbesondere in der modernen Medizintechnik eingesetzt. Bei den von den Datenzentren zur Verfügung gestellten (Software-) Applikationen handelt es sich dabei beispielsweise um Applikationen zum Anzeigen und Befunden von digitalen medizinischen Bilddaten.

Im Rahmen zunehmender Vernetzung und Arbeitsteilung im medizinischen Umfeld sind medizinische Applikationen heute üblicherweise mehrschichtig implementiert und auf eine Vielzahl von Clients einerseits sowie einen oder mehrere Server andererseits "verteilt" (deployed). Als "(Applikations-)Frontendmodul" oder kurz "(Applikations-)Frontend" sind hier und im Folgenden die clientseitig implementierten Bestandteile einer solchen Applikation bezeichnet. In Abgrenzung hierzu sind die serverseitig implementierten Bestandteile der Applikation als "(Applikations-)Backendmodul" oder kurz "(Applikations-)Backend" bezeichnet.

In jüngerer Zeit zeichnet sich auch im medizinischen Bereich zunehmend die Tendenz ab, Server und die darauf implementierten Applikations-Backends zunehmend aus den einzelnen Kliniken oder sonstigen medizinischen Organisationsstrukturen in übergreifend organisierte Datenzentren auszulagern, von wo aus serverseitige Hardware und Software im Rahmen eines sogenannten "Cloud Computing"-Konzeptes als externe Dienstleistung zur Verfügung gestellt werden.

Die Nutzung eines Datenzentrums ermöglicht dabei insbesondere eine flexible Skalierbarkeit der zur Verfügung stehenden Rechenleistung. So wird bei Verteilung einer medizinischen Applikation in einem Datenzentrum üblicherweise eine maximale Anzahl an virtuellen Servern spezifiziert, die gestartet und parallel zueinander betrieben werden können. Ein virtueller Server beinhaltet hierbei jeweils eine Instanz des Backends einer verteilten medizinischen Applikation. Die mit dem Betrieb der Applikation am Datenzentrum verbundenen Kosten werden aber in der Regel nur verbrauchsabhängig abgerechnet und richten sich insbesondere nach der Anzahl der tatsächlich parallel laufenden virtuellen Server.

Insbesondere bei medizinischen Organisationsstrukturen mit geografisch weit verteilten Standorten kann aber auch die Nutzung von Datenzentren Ineffizienzen aufgrund von Lastschwankungen (d.h. Fluktuationen der angeforderten Rechnerleistung) nicht verhindern. Dies liegt insbesondere daran, dass gemäß der üblichen Organisation eines Datenzentrums oder Datenzentren-Netzwerks einerseits jedem virtuellen Server ein bestimmter Standort, d.h. ein bestimmtes Datenzentrum fest zugewiesen ist, dass aber andererseits das Lastprofil der in einem der virtuellen Server implementierten Applikation oft zeitlich-geografische Schwankungen aufweist. Solche Lastschwankungen können in regelmäßiger oder unregelmäßiger Form auftreten. So besteht ein erhöhter Leistungsbedarf bestimmter medizinischen Applikationen z.B. typischerweise während der jeweils örtlichen Winterzeit aufgrund des damit einhergehenden, erhöhten Krankheitsaufkommens. Bei globaler Verbreitung der einem virtuellen Server zugeordneten Clients kann auf diese Weise der Schwerpunkt der Zugriffe mitunter in einem 12-Monats-Zyklus zwischen der Nordhalbkugel und der Südhalbkugel der Erde wechseln. Unregelmäßige Lastschwankungen können sich durch die Verschiebung des Tätigkeitsbereichs einzelner medizinischer Organisationen ergeben, aufgrund der bestimmte Applikationen durch diese Organisation abbestellt oder neu gebucht werden.

Die beschriebenen Lastschwankungen haben zur Folge, dass bei der Verteilung einer medizinischen Applikation in ein oder mehreren Datenzentren eine erhebliche Anzahl der Clients oft zumindest zeitweise geografisch vergleichsweise weit von dem zugeordneten virtuellen Servern entfernt ist. Dies führt zu großen Latenzzeiten bei der Datenübertragung zwischen den Clients und den zugeordneten Servern und erniedrigt die Gesamtperformance der jeweiligen Applikation. Zu einer hohen Latenzzeit trägt des Weiteren auch der Umstand bei, dass während örtlicher Lastspitzen die geografisch nahen Server häufig überlastet sind, und daher auf Zugriffe der Clients nicht mit befriedigender Geschwindigkeit reagieren können.

Hohe Latenzzeiten aufgrund von Überlastung werden bei medizinischen Applikationen auch dadurch begünstigt, dass diese Applikationen oft "mandantenfähig" (multi-tenant) implementiert sind. Hierunter versteht man, dass ein und dieselbe Instanz einer solchen Applikation mehrere "Mandanten", d.h. Organisationen oder Organisationsteile, bedienen kann, ohne dass diese Einblick in die Daten, Benutzerverwaltung und sonstige Information der jeweils anderen "Mandanten" haben. Mandantenfähigkeit (Multi-Tenancy) führt in der Regel dazu, dass sich die Lastprofile der einzelnen "Mandanten" dynamisch mischen, ohne dass dies für die einzelnen "Mandanten" ersichtlich ist. Daher ist für die einzelne Organisation eine Skalierungsplanung nicht oder nur schwer möglich.

Die Latenzzeit einer medizinischen Applikation ist aber ein entscheidender Faktor für die Produktivität von medizinischen Organisationsstrukturen, so dass hier ein erheblicher Verbesserungsbedarf besteht.

Der Erfindung liegt die Aufgabe zugrunde, ein Verfahren zum Betrieb eines Datenverarbeitungsnetzes der eingangs genannten Art anzugeben, das auf vergleichsweise einfache Art einen effektiven Betrieb einer in diesem Datenverarbeitungsnetz verteilten (Software-)Applikation ermöglicht. Der Erfindung liegt des Weiteren die Aufgabe zugrunde, eine zur Durchführung des Verfahrens geeignete Einrichtung anzugeben.

Bezüglich des Verfahrens wird die Aufgabe erfindungsgemäß gelöst durch die Merkmale des Anspruchs 1. Danach ist vorgesehen, in einer Datenbank Zugriffsdaten über die Interaktion zwischen den Clients und den jeweils zugeordneten virtuellen Servern zu sammeln. Die Zugriffsdaten umfassen hierbei Angaben zu den geografischen Standorten, von denen aus Clients auf virtuelle Server zugreifen. Die Zugriffsdaten umfassen des Weiteren Angaben zu dem geografischen Standort und Auslastungsgrad der virtuellen Server. Vorzugsweise wird für jeden Zugriff eines Clients auf einen virtuellen Server eine Angabe zu dem geografischen Standort und Auslastungsgrad des aufgerufenen Servers erhoben. Alternativ wäre aber auch denkbar, die Angaben zu dem geografischen Standort und Auslastungsgrad der virtuellen Server unabhängig von den einzelnen Zugriffen zu erfassen.

Die Zugriffsdaten werden vorzugsweise asynchron zu der Rückmeldung des virtuellen Servers an den Client in der Datenbank hinterlegt, um die Client-Server-Kommunikation nicht zu beeinträchtigen.

Die in der Datenbank gesammelten Zugriffsdaten werden erfindungsgemäß automatisch - insbesondere in regelmäßigen Zeitabständen von beispielsweise 24h - analysiert. Anhand des Analyseergebnisses wird automatisch ein Migrationsplan erstellt, der eine - gegebenenfalls geänderte - Verteilung der virtuellen Server auf die Datenzentren festlegt. Der Migrationsplan wird dabei nach der Maßgabe erstellt, dass die durchschnittliche Latenzzeit verbessert wird. Erfindungsgemäß werden schließlich - insbesondere in regelmäßigen Zeitabständen von beispielsweise 10 Tagen - die virtuellen Server nach Maßgabe des Migrationsplans zwischen den Datenzentren migriert. Die virtuellen Server werden hierbei vorzugsweise online, d.h. im laufenden Betrieb migriert.

Als "Latenzzeit" (auch: "Netzwerklatenz") wird die Zeitspanne zwischen dem Beginn eines Zugriffs (insbesondere der Absendung einer Datenbearbeitungsanfrage durch einen Client), und dem Eingang der Rückmeldung des Server bei dem Client (insbesondere dem Eingang des von dem Server rückübermittelten Bearbeitungsergebnisses) abzüglich der von dem Server für die Bearbeitung der Anfrage benötigten Rechenzeit bezeichnet.

Als "Zugriff" oder "Datenbearbeitungsanfrage" wird allgemein der Aufruf einer serverseitig implementierten Funktion durch einen Client bezeichnet. Im Rahmen des erfindungsgemäßen Verfahrens ist bevorzugt vorgesehen, dass Zugriffsdaten bei jedem Zugriff eines Clients auf einen virtuellen Server, erhoben werden. Zur Reduzierung des mit der Erfassung der Zugriffsdaten verbundenen Datenmenge kann alternativ aber auch vorgesehen sein, nur eine Stichprobe der von einem Client initiierten (Server-)Zugriffe und/oder (Server-) Zugriffe von lediglich einer ausgewählten Untergruppe von Clients zu berücksichtigen.

In einer verfeinerten Ausführung des Verfahrens werden als Zugriffsdaten zusätzlich zu den vorstehend genannten Angaben auch der Zeitpunkt und/oder die Dauer des Zugriffs erhoben und in der Datenbank gesammelt. Ferner wird vorzugsweise auch eine Angabe erfasst, aus der die Identität des aufgerufenen virtuellen Servers bestimmbar ist. Als Angaben zu dem Auslastungsgrad der virtuellen Server wird in einer zweckmäßigen Ausführung des Verfahrens für jeden Zugriff die Zahl der zu diesem Zeitpunkt an dem aufgerufenen virtuellen Server angemeldeten (eingeloggten) Nutzer erfasst.

Zur Minimierung der Latenzzeit werden gemäß einer Variante des Verfahrens im Zuge der Analyse der in der Datenbank gesammelten Zugriffsdaten überlastete virtuelle Server identifiziert. Hierzu wird insbesondere die Zahl der gleichzeitig an dem Server eingeloggten Clients oder Clientnutzer mit einer vorgegebenen, empfohlenen Maximalzahl parallel eingeloggter Clients bzw. Clientnutzer verglichen. Eine Serverüberlastung wird dabei daran erkannt, dass die empfohlene Maximalanzahl überschritten wird. Des Weiteren werden Datenzentren mit einer Überkapazität an virtuellen Servern (d.h. keinen oder besonders wenigen überlasteten virtuellen Servern) sowie Datenzentren mit einer Unterkapazität an virtuellen Servern (d.h. besonders vielen überlasteten Servern) identifiziert. Bei der Erstellung des Migrationsplans werden hierbei virtuelle Server von Datenzentren mit Überkapazität abgezogen und Datenzentren mit Unterkapazität zugeordnet.

Um spürbare Latenzzeiten beim Datenzugriff weitestgehend zu vermeiden, werden in vorteilhafter Ausführung des Verfahrens die einem virtuellen Server zugeordneten Daten stets lokal in dem Datenzentrum hinterlegt, an dem dieser virtuelle Server betrieben wird. Wird dieser virtuelle Server bei der Umsetzung eines Migrationsplanes von dem Datenzentrum auf ein anderes Datenzentrum migriert, so werden auch die zugeordneten Daten automatisch auf das neue Datenzentrum umgezogen. Die Datenverwaltung wird dabei vorteilhafterweise dadurch vereinfacht, dass jedem virtuellen Server ein eigenes Datenregister (auch als "Datenscheibe" bezeichnet) zugeordnet ist, in dem die zugehörigen Daten gesammelt zusammen mit zugehöriger Datenbankinformation abgelegt sind.

Eine in der Befundung von medizinischen Bilddaten zunehmend angewandte Methode zur Effizienzsteigerung ist das sogenannte "Night Hawk Reading". Dabei werden die von einer medizinischen Institution tagsüber erzeugten Bilddaten zur Befundung gezielt an einen anderen Standort oder eine andere Institution vergeben, die sich in einer anderen Zeitzone befindet, und die aufgrund dessen die Befundungsarbeit während der Nachtzeit der auftraggebenden Institution erledigen kann. Ähnliche Arbeitsweisen, bei denen abgegrenzte (Datenbearbeitungs-)Aufträge an einem von dem Auftraggeber geografisch weit entfernten Ort abgearbeitet werden sollen, finden sich allerdings auch in anderen medizinischen und nicht-medizinischen Anwendungsbereichen, beispielsweise, wenn im Falle einer schwierigen medizinischen Diagnose eine Meinung eines auf einem anderen Kontinent arbeitenden medizinischen Spezialisten eingeholt werden soll.

Bei solchen Aufträgen ist es zur Erzielung eines einheitlichen, aus Sicht des Auftraggebers standardgemäßen Arbeitsergebnisses und zur Vermeidung von Dateninkompatibilitäten häufig wünschenswert, dass die ferne Datenbearbeitung mit denjenigen Mitteln, insbesondere denjenigen Software-Applikationen erfolgt, die am Ort des Auftraggebers zur Verfügung stehen. Andererseits sollen bei der Vergabe des Auftrags an den fernen Auftragnehmer große Latenzzeiten vermieden werden, so dass ein Anschluss des Clients des Auftragnehmers an das Datenzentrum und die darauf betriebenen virtuellen Server des Auftraggebers häufig nicht in Frage kommt.

Um diesen widerstrebenden Anforderungen bei der Vergabe von Aufträgen an entfernte Auftragnehmer gleichermaßen gerecht zu werden, ist in einer speziellen Ausführungsform des Verfahrens vorgesehen, die für den Auftrag erforderlichen Daten zu sammeln und zusammen mit einem virtuellen Server und einem darauf implementierten Backend der oder jeder für die Abarbeitung des Auftrags erforderlichen Applikation in einer speziellen Datenumgebung zusammenzufassen, die hier als "Arbeitsplatz-Einheit" oder kurz "Arbeitsplatz" (Workspace) bezeichnet ist.

Dieser Arbeitsplatz wird dann als Ganzes von dem Datenzentrum des Auftraggebers an ein weiteres Datenzentrum gesendet, das dem oder jedem Client des Auftragsnehmers näher, insbesondere nächstliegend ist. Das sendende Datenzentrum ist nachfolgend auch als "auftraggebendes" Datenzentrum bezeichnet, während das empfangende Datenzentrum auch als "beauftragtes Datenzentrum" bezeichnet ist. Der oder jeder Client des Auftragnehmers ist als "ferner Client" oder "beauftragter Client" bezeichnet.

Der Arbeitsplatz enthält somit vorzugsweise die gesamte Software und sonstige Information, die notwendig ist, um das oder jedes im Arbeitsplatz enthaltene Applikations-Backend in dem beauftragten Datenzentrum auszuführen und dabei den Datenbearbeitungsauftrag zu erledigen.

In zweckmäßiger Ausgestaltung des Verfahrens werden nach dem Zugang des Arbeitsplatzes in dem beauftragten Datenzentrum der in dem Arbeitsplatz enthaltene virtuelle Server und das darauf implementierte Applikations-Backend gestartet. Der Auftragnehmer wird hiervon beispielsweise durch eine automatisch erzeugte E-Mail unterrichtet. Ein an dem beauftragten Client arbeitender Clientnutzer kann sich nun mit dem beauftragten Datenzentrum verbinden und den Datenbearbeitungsauftrag abarbeiten. Er bedient sich dabei eines auf dem beauftragten Client implementierten Applikations-Frontends, das mit dem in dem Arbeitsplatz enthaltenden Applikations-Backend kommuniziert. Nach Abarbeitung des Bearbeitungsauftrags wird ein dabei entstandenes Bearbeitungsresultat automatisch an das auftraggebende Datenzentrum zurückgesendet. Der im Arbeitsplatz enthaltene virtuelle Server wird hierauf vorzugsweise von dem beauftragten Datenzentrum heruntergefahren. Der Arbeitsplatz wird anschließend durch das beauftragte Datenzentrum zweckmäßigerweise gelöscht.

In einer einfachen Variante des Verfahrens wird das Applikations-Frontend an dem beauftragten Client unabhängig von der Versendung des Arbeitsplatzes zur Verfügung gestellt. Beispielsweise muss das Applikations-Frontend bereits auf dem beauftragten Client installiert sein, damit der Clientnutzer den Auftrag abarbeiten kann. In einer Weiterentwicklung der Erfindung wird abweichend hiervon auch das oder jedes für die Abarbeitung des Auftrags nötige Applikations-Frontend in dem Arbeitsplatz zur Verfügung gestellt. Der Arbeitsplatz enthält das oder jedes Applikations-Frontend dabei vorteilhafterweise als Download-Datei, die zur Abarbeitung des Auftrags auf den beauftragten Client heruntergeladen werden kann. Die Applikation ist hierbei vorzugsweise als Internet-Applikation implementiert, bei der das Applikations-Frontend ohne die Notwendigkeit einer Installation in einem internetfähigen Browser des beauftragten Clients ausgeführt werden kann.

In einer weiteren Variante des Verfahrens enthält der Arbeitsplatz zusätzlich zu dem oder jeden Applikations-Backend und gegebenenfalls dem oder jedem zugehörigen Applikations-Frontend mindestens eine Konfigurationsdatei, in der die am Ort des Auftraggebers verfügbaren Voreinstellungen der Applikation enthalten sind. Bei einer medizinischen Applikation zur Befundung von Bilddaten umfassen diese Voreinstellungen insbesondere sogenannte Layouts, die die Anzahl und Anordnung der pro Studie angezeigten Bilder festlegen, Angaben zum Funktions- und Lizenzumfang der Applikation, etc. Zusätzlich oder alternativ enthält der Arbeitsplatz optional Vorlagen (Templates) für medizinische Berichte sowie Abrechnungsinformation, Angaben zu Vor- und gegebenenfalls Nachuntersuchungen, etc.

Die vorstehend beschriebene Bündelung der für einen entfernt abzuarbeitenden Datenbearbeitungsauftrag erforderlichen Daten und der hierfür notwendigen Software in einem Arbeitsplatz, die Versendung des Arbeitsplatzes an ein beauftragtes Datenzentrum und die dortige Ausführung der Software für die Abarbeitung des Datenbearbeitungsauftrags wird als eigenständige Erfindung angesehen, die grundsätzlich auch unabhängig von den übrigen Schritten des hier beschriebenen Verfahrens vorteilhaft einsetzbar ist.

Bezüglich der zur Verfahrensdurchführung vorgesehenen Einrichtung wird die Aufgabe erfindungsgemäß gelöst durch die Merkmale des Anspruchs 9. Danach umfasst die Einrichtung eine Anzahl von Überwachungsmodulen sowie eine (Zugriffs-) Datenbank. Die Überwachungsmodule sind dabei dazu eingerichtet, die vorstehend näher spezifizierten Zugriffsdaten zu sammeln und in der Zugriffs-Datenbank abzulegen.

In einer möglichen Ausführungsform der Erfindung kann jedem Datenzentrum ein zentrales Überwachungsmodul zugeordnet sein. In bevorzugter Ausführung sind die Überwachungsmodule aber auf der Ebene der virtuellen Server implementiert. Es ist in dieser Ausführung also jedem virtuellen Server ein Überwachungsmodul zugeordnet. Das Überwachungsmodul ist hierbei insbesondere in das Applikations-Backend integriert, so dass die Server-Migration von der Applikation selbst gesteuert wird. Die Zugriffs-Datenbank ist dagegen vorzugsweise zentral organisiert und wird von den Überwachungsmodulen aller, weltweit betriebener virtueller Server des Datenverarbeitungsnetzes mit Zugriffsdaten beliefert.

Zur Analyse der in der Zugriffs-Datenbank gesammelten Zugriffsdaten umfasst die Einrichtung vorzugsweise ein Analysemodul, das zweckmäßigerweise ebenfalls zentral am Ort der Zugriffs-Datenbank implementiert ist. Das Analysemodul ist hierbei dazu eingerichtet, die vorstehend beschriebene Analyse der Zugriffsdaten automatisch durchzuführen und einen hinsichtlich der durchschnittlichen Latenzzeit des Datenverarbeitungsnetzes verbesserten Migrationsplan für die Verteilung der virtuellen Server auf die Datenzentren automatisch zu erstellen.

Die Einrichtung umfasst schließlich als Mittel zur Migrierung der virtuellen Server eine Anzahl von Migrationssteuermodulen, die dazu eingerichtet sind, die virtuellen Server nach Maßgabe des Migrationsplans zwischen den Datenzentren zu migrieren. Vorzugsweise ist jedem Datenzentrum ein Migrationssteuermodul zugewiesen.

Die Migrationssteuermodule sind in bevorzugter Fortbildung der Einrichtung des Weiteren dazu eingerichtet, die jedem Server zugeordneten Daten lokal in dem dem virtuellen Server zugeordneten Datenzentrum zu hinterlegen, und bei Migration des virtuellen Servers auch die zugeordneten Daten mit an den neuen Standort des virtuellen Servers umzuziehen.

Die Einrichtung umfasst in einer zweckmäßigen Ausführungsvariante zusätzlich ein Arbeitsplatz-Verwaltungsmodul. Dieses Arbeitsplatz-Verwaltungsmodul ist dazu eingerichtet, für die Abarbeitung eines Datenbearbeitungsauftrags an einem von dem Auftrag gebenden Datenzentrum geografisch entfernten Client einen Arbeitsplatz nach dem vorstehend beschriebenen Verfahren zu erstellen und diesem Arbeitsplatz an ein (beauftragtes) Datenzentrum zu übermitteln, das näher an dem beauftragten Client positioniert ist.

Im Rahmen der Erfindung kann im Rahmen des Datenverarbeitungsnetzes ein einzelnes Arbeitsplatz-Verwaltungsmodul vorgesehen sein, das die Datenbearbeitungsaufträge zentral koordiniert. Alternativ hierzu können auch mehrere, dezentral einem jeden Datenzentrum oder einem jeden virtuellen Server zugeordnete Arbeitsplatz-Verwaltungsmodule vorgesehen sein.

Bei den Überwachungsmodulen, dem Analysemodul, den Migrationssteuermodulen, und dem - optional vorhandenen Arbeitsplatz-Verwaltungsmodul - handelt es sich in bevorzugter Ausbildung der Erfindung um Softwaremodule.

Nachfolgend wird ein Ausführungsbeispiel der Erfindung anhand einer Zeichnung näher erläutert. Darin zeigen:
- FIG 1: in einem schematisch dargestellten Blockschaltbild ein Datenverarbeitungsnetz mit zwei geografisch voneinander entfernt angeordneten Datenzentren, in denen jeweils mehrere virtuelle Server mit jeweils einem darauf implementierten Backend einer medizinischen Software-Applikation betrieben werden, sowie mit einer Anzahl von Clients, auf denen je- weils ein Frontend der Software-Applikation implementiert ist, sowie mit einer Einrichtung zum Betrieb dieses Datenverarbeitungsnetzes,
- FIG 2: in Darstellung gemäß FIG 1 das dortige Datenverarbeitungsnetz in einem späteren Zustand nach der Migration eines virtuellen Servers,
- FIG 3 bis 6: in weiter vereinfachter Darstellung das Datenverarbeitungsnetz gemäß FIG 1 in vier aufeinanderfolgenden Verfahrensstadien während der Abarbeitung eines von einem Client eines ersten Datenzentrums an einen fernen Client gegebenen Datenbearbeitungsauftrags.

Einander entsprechende Teile, Größen und Strukturen sind in allen Figuren stets mit gleichen Bezugszeichen versehen.

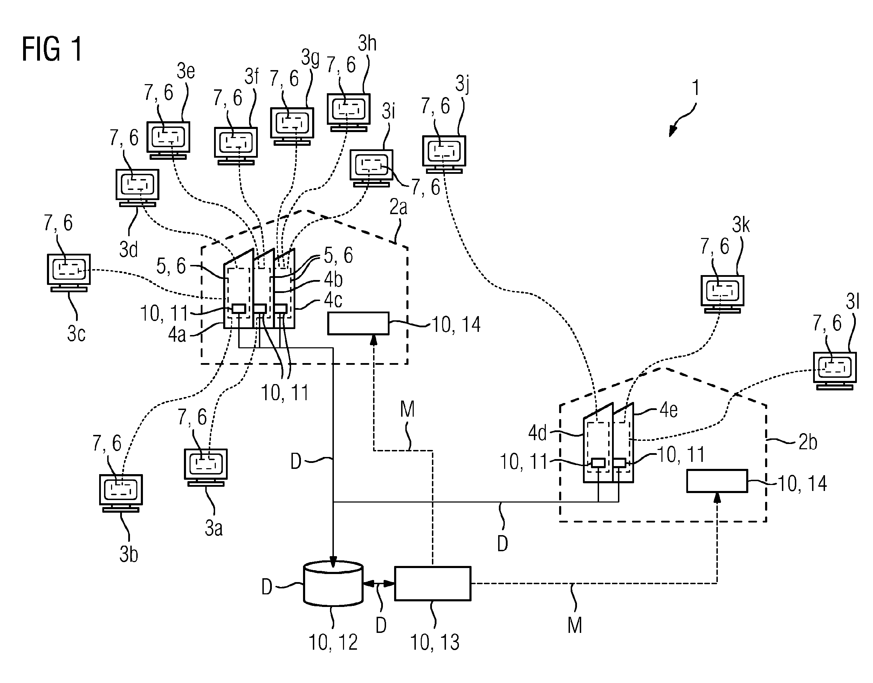

FIG 1 zeigt in grober schematischer Vereinfachung ein Datenverarbeitungsnetz 1. Das Datenverarbeitungsnetz 1 wird aus zwei Datenzentren 2a und 2b sowie aus einer Vielzahl von Clientrechnern (nachfolgend als Clients 3a bis 31 bezeichnet) gebildet. Die Datenzentren 2a und 2b sind sowohl untereinander als auch mit den Clients 3a bis 31 (in nicht näher dargestellter Weise) datenübertragungstechnisch, insbesondere über das Internet verbunden.

Die Datenzentren 2a und 2b sind ebenso wie die Clients 3a bis 31 geografisch weit verteilt. Beispielsweise sind das Datenzentrum 2a und die Clients 3a bis 3j in Nordamerika stationiert, während sich das Datenzentrum 2b und die Clients 3k und 31 in Europa befinden.

In jedem der Datenzentren 2a und 2b werden eine Anzahl von Hardware-Servern betrieben, auf denen jeweils mehrere virtuelle Server 4a-4e aufgesetzt sind. In dem vereinfachten Beispiel gemäß FIG 1 werden in dem Datenzentrum 2a die drei virtuellen Server 4a bis 4c betrieben, während in dem Datenzentrum 2b die zwei virtuellen Server 4d und 4e betrieben werden.

In jedem virtuellen Server 4a bis 4e wird eine Instanz eines (Applikations-)Backends 5 einer medizintechnische Software-Applikation 6 ausgeführt. In jedem der Clients 3a bis 31 wird ein (Applikations-)Frontend 7 der Applikation 6 ausgeführt. Die Applikation 6, bei der es sich beispielsweise um eine Software zur Anzeige und Befundung von digitalen, medizinischen Bilddaten handelt, ist als sogenannte Rich-Internet-Applikation (RIA) implementiert. Das bedeutet einerseits, dass die Frontends 7 der Applikation 6 ohne die Notwendigkeit einer Installation in einem auf dem jeweiligen Client 3a bis 31 installierten Web-Browser lauffähig sind. Zum Anderen bedeutet dies, dass die Frontends 7, zumindest was die Funktionalität zur Anzeige der medizinischen Daten angeht, betreibbar sind, ohne auf Serverdienste zurückgreifen zu müssen. Für numerisch aufwendigere Aktionen, insbesondere für die Anwendung von Bildbearbeitungsalgorithmen (z.B. Segmentierungsalgorithmen, Bilddrehungen, -spiegelungen, Umfärbungen etc.) greift jedes der Frontends 7 auf eines der Backends 5 zurück. Die Clients 3a bis 31 sind hierzu datenkommunikationstechnisch mit jeweils einem der virtuellen Server 4a bis 4e verbunden. Im dargestellten Beispiel sind die Clients 3b, 3c und 3d mit dem virtuellen Server 4a, die Clients 3a, 3e und 3f mit dem virtuellen Server 4b, die Clients 3g, 3h und 3i mit dem virtuellen Server 4c, der Client 3j mit dem virtuellen Server 4d und die Clients 3k und 31 mit dem virtuellen Server 4e verbunden.

Dem Datenverarbeitungsnetz 1 ist weiterhin eine Einrichtung 10 zum Betrieb desselben zugeordnet. Die Einrichtung 10 umfasst eine Anzahl von Überwachungsmodulen 11, von denen jeweils eines in jedem der Applikation-Backends 5 integriert ist. Die Einrichtung 10 umfasst des Weiteren eine Zugriffsdatenbank 12, ein Analysemodul 13 sowie zwei Migrationssteuermodule 14, von denen jeweils eines einem jeden der beiden Datenzentren 2a, 2b zugewiesen ist. Bei den Überwachungsmodulen 11, dem Analysemodul 13 und den Migrationssteuermodulen 14 handelt es sich um Softwaremodule.

Im Betrieb des Datennetzes 1 und der zugehörigen Einrichtung 10 werden durch die Überwachungsmodule 11 Zugriffsdaten D zu jedem Zugriff protokolliert, mit dem einer der Clients 3a bis 31 auf den jeweils zugeordneten virtuellen Server 4a bis 4e, genauer das darauf implementierte Backend 5 zugreift. Zu jedem Zugriff werden
- der geografische Standort des aufrufenden Clients 3a bis 31,
- der geografische Standort des virtuellen Servers 4a bis 4e,
- der Zeitpunkt des Zugriffs,
- eine Identifikationsnummer des virtuellen Servers 4a bis 4e,
- die Dauer des Zugriffs, und
- die Anzahl der eingeloggten Benutzer auf dem aufgerufenen virtuellen Server 4a bis 4e
erfasst.

Die Überwachungsmodule 11 legen die erfassten Zugriffsdaten D dabei in der Zugriffsdatenbank 12 ab.

Durch das Analysenmodul 13 werden die in der Zugriffsdatenbank 12 gespeicherten Zugriffsdaten D im Hinblick auf den Auslastungsgrad der virtuellen Server 4a bis 4e analysiert. Das Analysemodul 13 vergleicht hierbei die Zahl der durchschnittlich und/oder zu Spitzen-Lastzeiten an dem jeweiligen Server 4a bis 4e eingeloggten Clients 3a bis 31 oder Clientnutzer mit einer von dem Applikationshersteller empfohlenen Maximalanzahl der gleichzeitig eingeloggten Nutzer. Sofern die Anzahl der durchschnittlich eingeloggten Clients 3a bis 31 die empfohlene Maximalanzahl signifikant übersteigt, erkennt das Analysemodul 13 den betreffenden Server 4a bis 4e als überlastet. Des Weiteren identifiziert das Analysemodul 13 Datenzentren 2a, 2b mit Überkapazität an virtuellen Servern 4a bis 4e sowie Datenzentren 2a, 2b mit Unterkapazität an virtuellen Servern 4a bis 4e. Im dargestellten Beispiel sei angenommen, dass das Datenzentrum 2a eine Unterkapazität an virtuellen Servern 4a bis 4e aufweist, d.h. also überlastet ist, während das Datenzentrum 2b eine Überkapazität an virtuellen Servern 4a bis 4e aufweist.

Auf Basis dieses Analyseergebnisses erstellt das Analysemodul 13 einen Migrationsplan M, der Anweisungen zur - gegebenenfalls veränderten Verteilung der virtuellen Server 4a bis 4e auf die Datenzentren 2a und 2b enthält. Das Analysemodul 13 erstellt den Migrationsplan M dabei nach der Maßgabe, dass Über- und Unterkapazitäten der in den Datenzentrum 2a und 2b jeweils vorgehaltenen, virtuellen Server 4a bis 4e soweit wie möglich ausgeglichen wird. Im dargestellten Fall enthält der Migrationsplan M beispielsweise die Anweisung, den virtuellen Server 4d von dem Datenzentrum 2b abzuziehen und dem Datenzentrum 2a zuzuordnen.

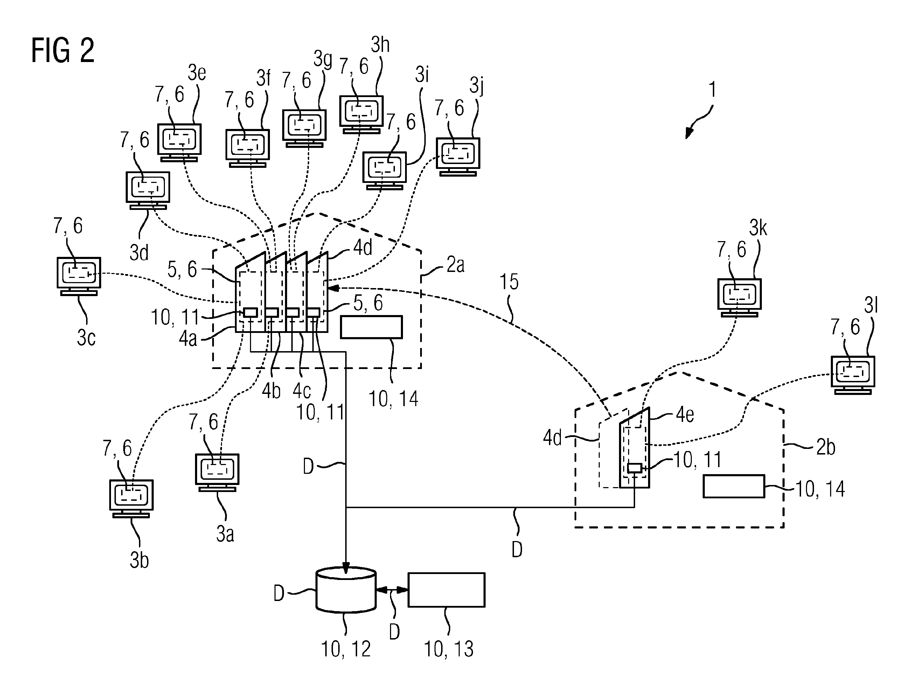

Das Analysemodul 13 sendet den Migrationsplan M an das jeweilige Migrationssteuermodul 14 in den Datenzentren 2a und 2b. Die Migrationssteuermodule 14 setzen den Migrationsplan M in festgelegten Zeitabständen von beispielsweise jeweils zehn Tagen um. Der virtuelle Server 4d wird hierbei durch die Migrationssteuermodule 14 - wie in FIG 2 durch einen Pfeil 15 angedeutet - im laufenden Betrieb von dem Datenzentrum 2b zu dem Datenzentrum 2a migriert.

Bei der Migration werden stets auch die Daten, die dem jeweils zu migrierenden virtuellen Server 4a bis 4e zugewiesen sind, stets mit umgezogen. Im dargestellten Beispiel werden also Daten, des virtuellen Servers 4d von dem Datenzentrum 2b an das Datenzentrum 2a transferiert und dort lokal abgelegt. Die Daten werden hierzu in einer sogenannten "Datenscheibe" standort-lokal abgelegt. Hierunter wird eine Datenorganisationsstruktur verstanden, die zusätzlich zu den Daten auch zugehörige Datenbankinformation, insbesondere Zugriffsberechtigungen umfasst und verwaltet.

Wie FIG 2 im Vergleich zu dem vor der Migration bestehenden Zustand gemäß FIG 1 zeigt, wird durch die Migration des virtuellen Servers 4d einerseits die Auslastung der in dem Datenzentrum 2a betriebenen virtuellen Server 4a bis 4c reduziert, was zu einer ersten Verbesserung der durchschnittlichen Latenzzeit des Datenzentrums 2a führt. Des Weiteren ermöglicht die Aufstockung der virtuellen Server 4a bis 4d an dem Datenzentrum 2a, die geografisch zu diesem Datenzentrum 2a nahen Clients 3a bis 3h an das Datenzentrum 2a lokal anzubinden. Lange Datenübertragungsstrecken, wie in FIG 1 beispielhaft an der Verbindung zwischen dem Client 3j und dem - dort noch im Datenzentrum 2b lokalisierten - virtuellen Server 4d angedeutet, werden hierdurch vermieden, was eine weitere Verbesserung der durchschnittlichen Latenzzeit mit sich bringt. Durch die laufende Erhebung der Zugriffsdaten D und die periodische Erstellung des latenzzeit-optimierten Migrationsplans M und dessen Umsetzung durch die Migrationssteuermodule 14 wird somit die Latenzzeit des Datenverarbeitungsnetzes 1 kontinuierlich verbessert bzw. auf geringem Niveau gehalten.

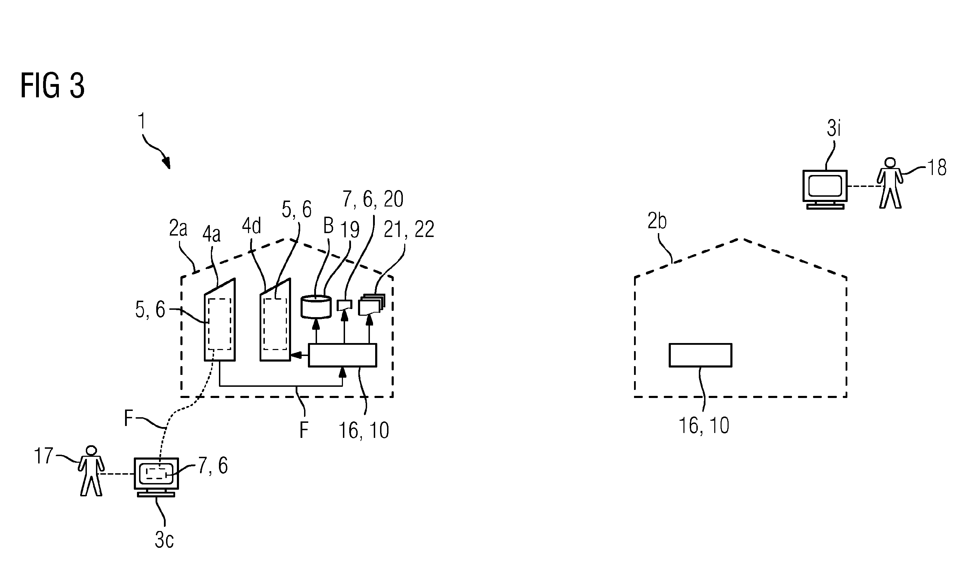

Zusätzlich zu der vorstehend beschriebenen, periodischen Migration der virtuellen Server 4a bis 4e unterstützt die Einrichtung 10 einen vorübergehenden Austausch von virtuellen Servern 4a bis 4e zwischen den Datenzentren 2a und 2b für das sogenannte "Night Hawk Reading", d.h. die - bezogen auf den Erzeugungsort der Bilddaten - nächtliche Befundung der an einem geografischen Standort erzeugten Bilddaten durch einen in einer anderen Zeitzone arbeitenden Clientnutzer. Die Einrichtung 10 umfasst hierzu zusätzlich zwei nachfolgend als "Arbeitsplatz-Verwaltungsmodul" oder kurz "Arbeitsplatz-Verwaltung" 16 bezeichnete Softwaremodule, von denen eines dem Datenzentrum 2a, und das andere dem Datenzentrum 2b zugewiesen ist. Die FIG 3 bis FIG 6 zeigen in vier aufeinanderfolgenden Momentaufnahmen den Zustand des Datenverarbeitungsnetzes 1 während der Abarbeitung eines entsprechenden (Datenbearbeitungs-)Auftrags F, den ein beispielhaft dem Client 3c zugeordneter Clientnutzer 17 einem beispielsweise dem Client 3i zugeordneten Clientnutzer 18 erteilt.

Für die Erteilung des Auftrags F spezifiziert der beauftragende Clientnutzer 17 über das Applikations-Frontend 7 seines Clients 3c, welche Bilddaten befundet werden sollen, mit welcher Applikation oder welchen Applikationen die Befundung vorgenommen werden soll und welche medizinische Institution bzw. welcher Arzt die Befundung durchführen soll. Im dargestellten Beispiel spezifiziert der auftraggebende Clientnutzer 17 für die Befundung einen in einem Speicher 19 des Datenzentrums 2a vorgehaltenen Bilddatensatz B und die Applikation 6 für die Befundung sowie den Clientnutzer 18 als gewünschten Auftragnehmer. Nach Bestätigung des Auftrags F wird dieser von dem Frontend 7 an das zugehörige Applikations-Backend 5 weitergegeben, dass daraufhin den Auftrag F an die Arbeitsplatz-Verwaltung 16 weitergibt.

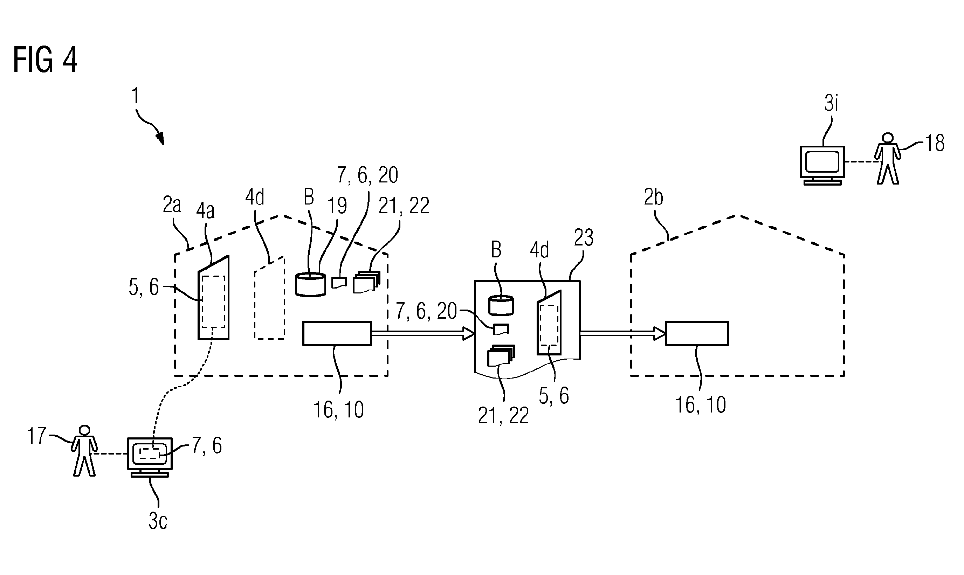

Die Arbeitsplatz-Verwaltung 16 lädt daraufhin aus dem Speicher 19 den zu befundenden Bilddatensatz B. Sie lädt weiterhin einen gerade nicht benötigten virtuellen Server (hier den Server 4d) mit dem darauf implementierten Applikations-Backend 5 der Applikation 6. Außerdem lädt sie eine Download-Datei 20 des Applikations-Frontends 7 sowie eine oder mehrere Konfigurationsdateien 21 und Vorlagen 22, mit denen die Applikation 6 an dem Standort des Clients 3c betrieben wird. Die Arbeitsplatz-Verwaltung 16 verpackt diese Daten und Softwarestrukturen - wie in FIG 4 schematisch angedeutet - in einer als Arbeitsplatz 23 bezeichneten Datenumgebung (auch als Datenrahmen oder Datenpaket bezeichnet) und übermittelt diesen Arbeitsplatz 23 an die Arbeitsplatz-Verwaltung 16 des dem beauftragten Clients 3i nächstgelegenen Datenzentrums 2b.

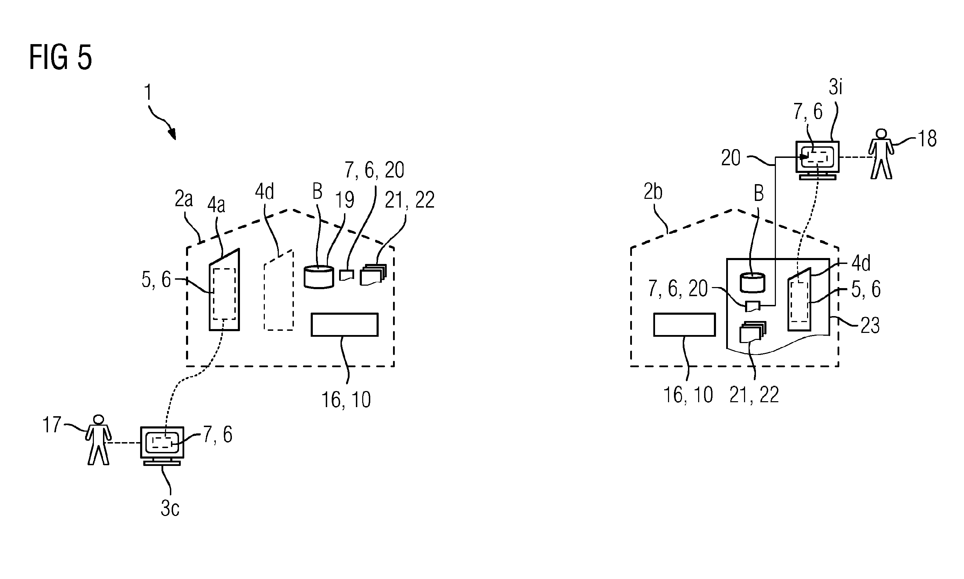

Das Datenzentrum 2b führt nach dem Erhalt des Arbeitsplatzes 23 den darin enthaltenen virtuellen Server 4d und das darauf implementierte Applikations-Backend 5 aus und benachrichtigt den auftragnehmenden Clientnutzer 18 durch eine automatisch erzeugte E-Mail von dem Eingang des Auftrags F. Der Clientnutzer 18 kann sich nun gemäß FIG 5 - beispielsweise durch Betätigung eines in der E-Mail enthaltenen Link durch Zugriff auf die Download-Datei 20 das Frontend 7 der Applikation 6 auf seinen Client 3i herunterladen, und das Frontend 7 mit dem im virtuellen Server 4d laufenden Backend 5 der Applikation 6 verbinden. Er kann dann den Bilddatensatz B unter Rückgriff auf die Konfigurationsdateien 21 und Vorlagen 22 befunden. Der auftragnehmende Clientnutzer 18 hat somit dieselben Voraussetzungen, die er auch beim Einloggen am Standort des auftraggebenden Clientnutzers 17 hätte, muss hierfür aber infolge der kurzen Datenverbindung zu dem Datenzentrum 2b keine langen Latenzzeiten in Kauf nehmen.

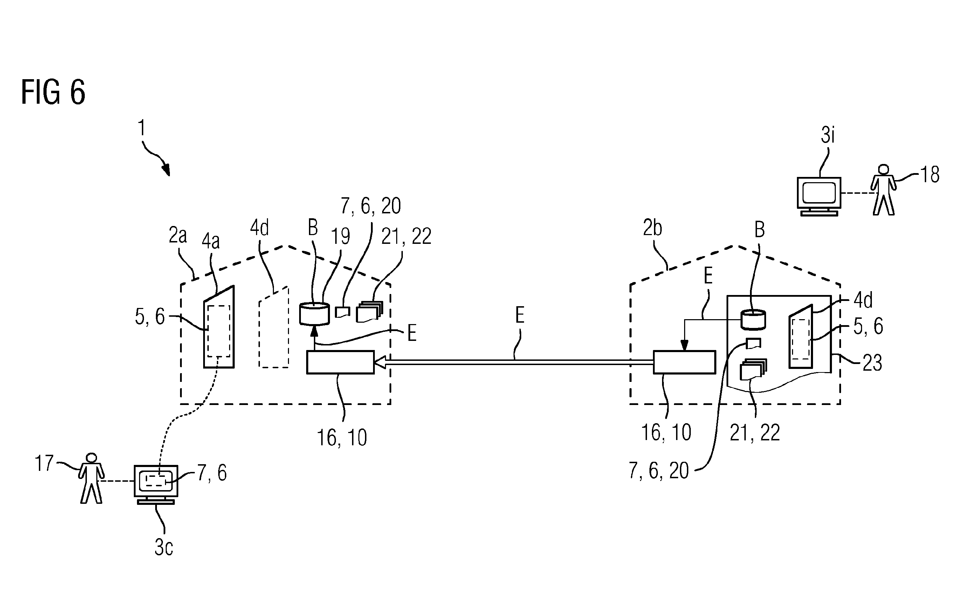

Nach abgeschlossener Befundung des Bilddatensatzes B erstellt der Clientnutzer 18 ein Bearbeitungsergebnis E, hier insbesondere in Form eines medizinischen Berichts und bestätigt die Beendigung des Auftrags F. Hierauf leitet die Arbeitsplatz-Verwaltung 16 des Datenzentrums 2b das Bearbeitungsergebnis E an die Arbeitsplatz-Verwaltung 16 des Datenzentrum 2a zurück (FIG 6), das dieses Bearbeitungsergebnis E in dem Speicher 19 hinterlegt und den Auftrag F schließt. Optional kann vorgesehen sein, dass die Arbeitsplatzverwaltung 16 des Datenzentrums 2a den auftraggebenden Clientnutzer 17, z.B. durch eine automatisch erzeugte E-Mail über den Erhalt des Bearbeitungsergebnisses E benachrichtigt.

Der Umfang der Erfindung ist nicht auf vorstehend beschriebene Ausführungsbeispiel beschränkt. Vielmehr können von dem Fachmann im Rahmen der Erfindung zahlreiche Varianten und Weiterentwicklungen des beschriebenen Verfahrens gefunden werden.

Zusammenfassend werden erfindungsgemäß im Betrieb einer zwischen mehreren geographisch entfernten Datenzentren 2a,2b und einer Vielzahl von Clients 3a-31 verteilten Applikation 6 automatisch Zugriffsdaten D über die Zugriffe der Clients 3a-31 auf die in den Datenzentren 2a,2b betriebenen virtuellen Server 4a-4e erfasst. Anhand der Zugriffsdaten D werden automatisch ein Migrationsplan M für eine latenzzeitoptimierte Verteilung der virtuellen Server 4a-4e auf die Datenzentren 2a,2b erstellt, und die virtuellen Server 4a-4e nach Maßgabe des Migrationsplans M migriert.

### Bezugszeichenliste

- 1: Datenverarbeitungsnetz
- 2: Datenzentrum
- 3a-1: Client
- 4a-e: (virtueller) Server
- 5: (Applikations-)Backend
- 6: (Software-)Applikation
- 7: (Applikations-)Frontend
- 10: Einrichtung
- 11: Überwachungsmodul
- 12: (Zugriffs-)Datenbank
- 13: Analysemodul
- 14: Migrationssteuerung
- 15: Pfeil
- 16: Arbeitsplatz-Verwaltung
- 17: Client-Nutzer
- 18: Client-Nutzer
- 19: Speicher
- 20: Download-Datei
- 21: Konfigurationsdatei
- 22: Vorlage
- 23: Arbeitsplatz

- D: Zugriffsdaten
- M: Migrationsplan
- B: Bilddatensatz
- F: (Datenbearbeitungs-)Auftrag
- E: Bearbeitungsergebnis

## Patentansprüche

1. Verfahren zum Betrieb eines Datenverarbeitungsnetzes (1) mit mehreren geographisch beabstandeten Datenzentren (2a,2b), und mit einer Vielzahl von Clientrechnern (3a-31), die zumindest mit jeweils einem der Datenzentren (2a,2b) datenübertragungstechnisch verbunden sind, wobei in jedem der Datenzentren (2a,2b) ein oder mehrere virtuelle Server (4a-4e) betreibbar sind, wobei auf jedem virtuellen Server (4a-4e) ein Applikations-Backendmodul (5) einer verteilten Software-Applikation (6) implementiert ist, wobei auf jedem der Clientrechner (3a-31) ein Applikations-Frontendmodul (7) der Software-Applikation (6) implementiert ist, und wobei jedem Applikations-Frontendmodul (7) ein Applikations-Backendmodul (6) zur Bearbeitung von Datenbearbeitungsanfragen zuweisbar oder zugewiesen ist, wobei verfahrensgemäß
- in einer Datenbank (12) Zugriffsdaten (D) gesammelt werden, die
o Angaben zu dem geographischen Standort der Clients (3a-31),
o Angaben zu dem geographischen Standort der virtuellen Server (4a-4e) sowie
o Angaben zu dem Auslastungsgrad der virtuellen Server (4a-4e),
umfassen,
- die in der Datenbank (12) gesammelten Zugriffsdaten (D) automatisch analysiert werden,
- anhand des Analyseergebnisses automatisch ein hinsichtlich der durchschnittlichen Latenzzeit verbesserter Migrationsplan (M) für die Verteilung der virtuellen Server (4a-4e) auf die Datenzentren (2a,2b) erstellt wird, und
- die virtuellen Server (4a-4e) nach Maßgabe des Migrationsplans (M) zwischen den Datenzentren (2a,2b) migriert werden.

2. Verfahren nach Anspruch 1,
wobei als Zugriffsdaten (D) zusätzlich für jede Datenbearbeitungsanfrage der Zeitpunkt und/oder die Dauer der Datenbearbeitungsanfrage und/oder eine Angabe zur Identität des aufgerufenen virtuellen Servers erfasst werden.

3. Verfahren nach Anspruch 1 oder 2,
wobei als Angaben zu dem Auslastungsgrad für jede Datenbearbeitungsanfrage die Zahl der an dem aufgerufenen virtuellen Server (4a-4e) angemeldeten Nutzer erfasst wird.

4. Verfahren nach einem der Ansprüche 1 bis 3,
- wobei im Zuge der Analyse anhand der in der Datenbank (12) gesammelten Zugriffsdaten (D)
o überlastete virtuelle Server (4a-4e) identifiziert werden,
o Datenzentren (2a,2b) mit einer Überkapazität an virtuellen Servern (4a-4e) identifiziert werden,
o Datenzentren (2a,2b) mit Unterkapazität an virtuellen Servern identifiziert werden, und
- wobei bei der Erstellung des Migrationsplans (M) virtuelle Server (4a-4e) von Datenzentren (2a,2b) mit Überkapazität abgezogen und Datenzentren (2a,2b) mit Unterkapazität zugeordnet werden.

5. Verfahren nach einem der Ansprüche 1 bis 4,
wobei die einem virtuellen Server (4a-4e) zugeordneten Daten (D) lokal in dem dem virtuellen Server (4a-4e) zugeordneten Datenzentrum (2a,2b) hinterlegt werden.

6. Verfahren nach einem der Ansprüche 1 bis 5,
- wobei für die Abarbeitung eines Datenbearbeitungsauftrags (F) an einem von einem auftraggebenden Datenzentrum (2a,2b) geographisch fernen Client (3a-31) die für den Bearbeitungsauftrag (F) erforderlichen Daten (B) zusammen mit einem virtuellen Server (4a-4e) und einem darauf implementierten Applikations-Backendmodul (5) einer für den Bearbeitungsauftrag (F) erforderlichen Applikation (6) in einer Arbeitsplatz-Einheit (23) zusammengefasst werden,
- wobei die Arbeitsplatz-Einheit (23) von dem auftraggebenden Datenzentrum (2a,2b) an ein dem fernen Client (3a-31) näheres beauftragtes Datenzentrum (2a,2b) gesendet wird,
- wobei in dem beauftragten Datenzentrum (2a,2b) der in der Arbeitsplatz-Einheit (23) enthaltene virtuelle Server (4a-4e) betrieben, und das darauf implementierte Applikations-Backendmodul (5) in Kommunikation mit einem auf dem beauftragten Client (3a-31) implementierten Applikations-Frontendmodul (7) der zugehörigen Applikation (6) ausgeführt werden, und
- wobei nach der Abarbeitung des Bearbeitungsauftrags (F) ein Bearbeitungsresultat (E) an das auftraggebende Datenzentrum (2a,2b) rückgesendet wird.

7. Verfahren nach Anspruch 6,
wobei die Arbeitsplatz-Einheit (23) zusätzlich zu dem Applikations-Backendmodul (5) eine Download-Datei (20) des zugehörigen Applikations-Frontendmoduls (7) enthält, das zur Abarbeitung des Bearbeitungsauftrags (F) von dem fernen Client (3a-31) heruntergeladen wird.

8. Verfahren nach Anspruch 6 oder 7,
wobei die Arbeitsplatz-Einheit (23) zusätzlich mindestens eine Konfigurationsdatei (21) mit Voreinstellungen für das Applikations-Backendmodul (5) und/oder das Applikations-Frontendmodul (7) enthält, und wobei das Applikations-Backendmodul (5) bzw. das Applikations-Frontendmodul (7) an dem beauftragten Datenzentrum (2a,2b) bzw. dem fernen Client (3a-31) mit diesen Voreinstellungen betrieben werden.

9. Einrichtung (10) zum Betrieb eines Datenverarbeitungsnetzes (1) mit mehreren geographisch beabstandeten Datenzentren (2a,2b), und mit einer Vielzahl von Clientrechnern (3a-31), die mit jeweils einem der Datenzentren (2a,2b) datenübertragungstechnisch verbunden sind, wobei in jedem der Datenzentren (2a,2b) ein oder mehrere virtuelle Server (4a-4e) betreibbar sind, wobei auf jedem virtuellen Server (4a-4e) ein Applikations-Backendmodul (5) einer verteilten Software-Applikation (6) implementiert ist, wobei auf jedem der Clientrechner (3a-31) ein Applikations-Frontendmodul (7) der Software-Applikation (6) implementiert ist, und wobei jedem Applikations-Frontendmodul (7) ein Applikations-Backendmodul (5) zur Bearbeitung von Datenbearbeitungsanfragen zugewiesen ist, wobei die Einrichtung (10) folgendes aufweist:
- ein jedem Datenzentrum (2a,2b) oder jedem virtuellen Server (4a-4e) zugeordnetes Überwachungsmodul (11), das dazu eingerichtet ist, Zugriffsdaten (D) zu sammeln, die
o Angaben zu dem geographischen Standort der Clients (3a-31),
o Angaben zu dem geographischen Standort der virtuellen Server (4a-4e) sowie
o Angaben zu dem Auslastungsgrad der virtuellen Server (4a-4e),
umfassen;
- eine Datenbank (12) zur Speicherung der gesammelten Zugriffsdaten (D);
- ein Analysemodul (13), das dazu eingerichtet ist,
o die in der Datenbank (12) gesammelten Zugriffsdaten (D) automatisch zu analysieren, und
o anhand des Analyseergebnisses (13) einen hinsichtlich der durchschnittlichen Latenzzeit verbesserten Migrationsplan (M) für die Verteilung der virtuellen Server (4a-4e) auf die Datenzentren (2a,2b) zu erstellen; sowie
- Mittel (14) zur Migrierung der virtuellen Server (4a,4b) zwischen den Datenzentren (2a,2b) nach Maßgabe des Migrationsplans (M).

10. Einrichtung (10) nach Anspruch 9,
wobei das Analysemodul (13) dazu eingerichtet ist, als Zugriffdaten (D) zusätzlich für jede Datenbearbeitungsanfrage den Zeitpunkt und/oder die Dauer der Datenbearbeitungsanfrage und/oder eine Angabe zur Identität des aufgerufenen virtuellen Servers (4a-4e) zu erfassen.

11. Einrichtung (10) nach Anspruch 9 oder 10,
wobei das Analysemodul (13) dazu eingerichtet ist, als Angaben zu dem Auslastungsgrad für jede Datenbearbeitungsanfrage die Zahl der an dem aufgerufenen virtuellen Server (4a-4e) angemeldeten Clients (3a-31) zu erfassen.

12. Einrichtung (10) nach einem der Ansprüche 9 bis 11, wobei das Analysemodul (13) dazu eingerichtet ist, anhand der in der Datenbank (D) gesammelten Zugriffsdaten (D)
- überlastete virtuelle Server (4a-4e) zu identifizieren,
- Datenzentren (2a,2b) mit einer Überkapazität an virtuellen Servern (4a-4e) zu identifizieren,
- Datenzentren (2a,2b) mit Unterkapazität an virtuellen Servern zu identifizieren, und
und bei der Erstellung des Migrationsplans (M) virtuelle Server (4a-4e) von Datenzentren (2a,2b) mit Überkapazität abzuziehen und Datenzentren (2a,2b) mit Unterkapazität zuzuordnen.

13. Einrichtung (10) nach einem der Ansprüche 9 bis 12, wobei die Mittel (14) zur Migrierung der virtuellen Server (4a-4e) dazu eingerichtet sind, die jedem Server (4a-4e) zugeordneten Daten lokal in dem dem Server (4a-4e) zugeordneten Datenzentrum (2a,2b) zu hinterlegen.

14. Einrichtung (10) nach einem der Ansprüche 9 bis 13, mit einem Arbeitsplatz-Verwaltungsmodul (16), das dazu eingerichtet ist, für die Abarbeitung eines Datenbearbeitungsauftrags (F) an einem von einem auftraggebenden Datenzentrum (2a,2b) geographisch fernen Client (3a-31) die für den Bearbeitungsauftrag (F) erforderlichen Daten (B) zusammen mit einem virtuellen Server (4a-4e) und einem darauf implementierten Applikations-Backendmodul (5) einer für den Bearbeitungsauftrag (F) erforderlichen Software-Applikation (6) in einer Arbeitsplatz-Einheit (23) zusammenzufassen und von dem auftraggebenden Datenzentrum (2a,2b) an ein dem fernen Client (3a-31) näheres, beauftragtes Datenzentrum (2a,2b) zu senden.

15. Einrichtung (10) nach Anspruch 14,
wobei das Arbeitsplatz-Verwaltungsmodul (16) dazu eingerichtet ist, der Arbeitsplatz-Einheit (23) zusätzlich zu dem Applikations-Backendmodul (5) eine Download-Datei (20) des zugehörigen Applikations-Frontendmoduls (7) hinzuzufügen, die zur Abarbeitung des Bearbeitungsauftrags (F) durch den fernen Client (3a-31) von dem beauftragten Datenzentrum (2a,2b) herunterladbar ist.

16. Einrichtung (10) nach Anspruch 14 oder 15,
wobei das Arbeitsplatz-Verwaltungsmodul (16) dazu eingerichtet ist, der Arbeitsplatz-Einheit (23) zusätzlich mindestens eine Konfigurationsdatei (21) mit Voreinstellungen für das Applikations-Backendmodul (5) und/oder das Applikations-Frontendmodul (7) hinzuzufügen, mit welchen das Applikations-Backendmodul (5) bzw. das Applikations-Frontendmodul (7) an dem beauftragten Datenzentrum (2a,2b) bzw. dem fernen Client (3a-31) betreibbar ist.

## Geänderte Patentansprüche

### Geänderte Patentansprüche gemäss Regel 137(2) EPÜ.

**1.** Verfahren zum Betrieb eines Datenverarbeitungsnetzes (1) mit mehreren geographisch beabstandeten Datenzentren (2a,2b), und mit einer Vielzahl von Clientrechnern (3a-31), die zumindest mit jeweils einem der Datenzentren (2a,2b) datenübertragungstechnisch verbunden sind, wobei in jedem der Datenzentren (2a,2b) ein oder mehrere virtuelle Server (4a-4e) betreibbar sind, wobei ein hinsichtlich der durchschnittlichen Latenzzeit verbesserter Migrationsplan (M) für die Verteilung der virtuellen Server (4a-4e) auf die Datenzentren (2a,2b) erstellt wird, und wobei die virtuellen Server (4a-4e) nach Maßgabe des Migrationsplans (M) zwischen den Datenzentren (2a,2b) migriert werden, **dadurch gekennzeichnet,**
- **dass** auf jedem virtuellen Server (4a-4e) ein Applikations-Backendmodul (5) einer verteilten Software-Applikation (6) implementiert ist, wobei auf jedem der Clientrechner (3a-31) ein Applikations-Frontendmodul (7) der Software-Applikation (6) implementiert ist, und wobei jedem Applikations-Frontendmodul (7) ein Applikations-Backendmodul (6) zur Bearbeitung von Datenbearbeitungsanfragen zuweisbar oder zugewiesen ist,
- **dass** in einer Datenbank (12) Zugriffsdaten (D) gesammelt werden, die
o Angaben zu dem geographischen Standort der Clients (3a-31),
o Angaben zu dem geographischen Standort der virtuellen Server (4a-4e) sowie
o Angaben zu dem Auslastungsgrad der virtuellen Server (4a-4e),
umfassen,
- **dass** die in der Datenbank (12) gesammelten Zugriffsdaten (D) automatisch analysiert werden, und
- **dass** der verbesserte Migrationsplan (M) anhand des Analyseergebnisses erstellt wird.

**9.** Einrichtung (10) zum Betrieb eines Datenverarbeitungsnetzes (1) mit mehreren geographisch beabstandeten Datenzentren (2a,2b), und mit einer Vielzahl von Clientrechnern (3a-31), die mit jeweils einem der Datenzentren (2a,2b) datenübertragungstechnisch verbunden sind, wobei in jedem der Datenzentren (2a,2b) ein oder mehrere virtuelle Server (4a-4e) betreibbar sind, mit einem Analysemodul (13), das dazu eingerichtet ist, einen hinsichtlich der durchschnittlichen Latenzzeit verbesserten Migrationsplan (M) für die Verteilung der virtuellen Server (4a-4e) auf die Datenzentren (2a,2b) zu erstellen, sowie mit Mitteln (14) zur Migrierung der virtuellen Server (4a,4b) zwischen den Datenzentren (2a,2b) nach Maßgabe des Migrationsplans (M) ,
**dadurch gekennzeichnet,**
- **dass** auf jedem virtuellen Server (4a-4e) ein Applikations-Backendmodul (5) einer verteilten Software-Applikation (6) implementiert ist, dass auf jedem der Clientrechner (3a-31) ein Applikations-Frontendmodul (7) der Software-Applikation (6) implementiert ist, und dass jedem Applikations-Frontendmodul (7) ein Applikations-Backendmodul (5) zur Bearbeitung von Datenbearbeitungsanfragen zugewiesen ist,
- **dass** jedem Datenzentrum (2a,2b) oder jedem virtuellen Server (4a-4e) ein Überwachungsmodul (11) zugeordnet ist, das dazu eingerichtet ist, Zugriffsdaten (D) zu sammeln, die
o Angaben zu dem geographischen Standort der Clients (3a-31),
o Angaben zu dem geographischen Standort der virtuellen Server (4a-4e) sowie
o Angaben zu dem Auslastungsgrad der virtuellen Server (4a-4e),
umfassen,
- **dass** eine Datenbank (12) zur Speicherung der gesammelten Zugriffsdaten (D) vorgesehen ist, und
- **dass** das Analysemodul (13) dazu eingerichtet ist,
o die in der Datenbank (12) gesammelten Zugriffsdaten (D) automatisch zu analysieren, und
o den verbesserten Migrationsplan (M) anhand des Analyseergebnisses (13) zu erstellen.
